(19) **Europäisches Patentamt**

**European Patent Office**

**Office européen des brevets**

(11) **EP 1 305 164 B1**

(12) **EUROPEAN PATENT SPECIFICATION**

(45) Date of publication and mention
of the grant of the patent:
**16.11.2005 Bulletin 2005/46**

(51) Int Cl.⁷: **B32B 25/10**, B32B 27/12,
A41D 31/02, C08J 5/18,
D06N 3/18

(21) Application number: **02715764.3**

(22) Date of filing: **16.01.2002**

(86) International application number:
**PCT/JP2002/000253**

(87) International publication number:
**WO 2002/060687 (08.08.2002 Gazette 2002/32)**

(54) **WATER-VAPOR-PERMEABLE WATERPROOF COMPOSITE FABRIC, WATERPROOF TEXTILE ARTICLE CONTAINING SAME AND PROCESSES FOR PRODUCING SAME**

WASSERDAMPFDURCHLÄSSIGES UND WASSERUNDURCHLÄSSIGES VERBUNDGEWEBE, DIESES ENTHALTENDER WASSERUNDURCHLÄSSIGER GEGENSTAND SOWIE VERFAHREN ZUR HERSTELLUNG DESSELBEN

TISSU COMPOSITE IMPERMEABLE A L'EAU, PERMEABLE A LA VAPEUR D'EAU, ARTICLE TEXTILE IMPERMEABLE A L'EAU CONTENANT LE TISSU COMPOSITE ET PROCEDES DE FABRICATION CORRESPONDANTS

(84) Designated Contracting States:
**DE FR GB IT**

(30) Priority: **31.01.2001 JP 2001023037**

(43) Date of publication of application:
**02.05.2003 Bulletin 2003/18**

(73) Proprietor: **TEIJIN LIMITED**
**Osaka-shi Osaka 541-0054 (JP)**

(72) Inventor: **HONNA, Hiroshi, c/o TEIJIN LIMITED**
**Ibaraki-shi, Osaka 567-0006 (JP)**

(74) Representative: **HOFFMANN EITLE**
**Patent- und Rechtsanwälte**
**Arabellastrasse 4**
**81925 München (DE)**

(56) References cited:
| | |
|---|---|
| **EP-A- 0 522 250** | **EP-A- 0 767 284** |
| **EP-A2- 1 026 310** | **WO-A-96/37665** |
| **DE-A- 3 835 016** | **JP-A- 2000 096 450** |
| **JP-A- 2000 119 970** | |

**Description**

Technical Field

The present invention relates to a water-vapor-permeable waterproof composite fabric, a waterproof textile article containing the same and processes for producing the same. Particularly, the present invention relates to a water-vapor-permeable waterproof composite fabric having excellent water vapor permeability and superior water pressure resistance (water penetration resistance under pressure) even after repeated launderings are applied thereto, a waterproof textile article containing the same and processes for producing the same with high efficiency.

Background Art

When a fabric is worn as clothing on the human body, the clothing is required to exhibit both of a high water vapor permeability to allow a water vapor derived from perspiration generated by the human body to leave through the clothing and a high resistance to permeation of water, for example, rain, through the clothing, to prevent penetration of water into the clothing.
As means for satisfying the above-mentioned two requirements, it is known that one side surface of a substrate consisting of a fiber fabric can be laminated with a film comprising a polytetrafluoroethylene or a polyurethane elastomer, or can be coated with a polyurethane elastomer.
The conventional water-vapor-permeable waterproof fabrics produced as mentioned above are environmentally disadvantageous in that when these fabrics are discarded and burnt, the laminated or coated polymers cause gasses harmful to the human body to be generated.
Accordingly, the polymer materials for the water-vapor-permeable waterproof fabrics which have both a high water vapor permeability and an excellent waterproof property, and which cause no or little affect on the environment, are in strong demand.
For this reason, it is expected that the above-mentioned polytetrafluoroethylene and polyurethane elastomers will be replaced by polyetherester elastomers (PEE) which have excellent heat resistance and mechanical properties, are capable of forming films having a moderate elasticity and a good hand, and can be burnt without generating harmful combustion gases.
As a water-vapor-permeable waterproof fabric using the above-mentioned PEE, U.S. Patent No. 4,493,870 discloses a laminated fabric comprising a film formed from a PEE resin.
The U.S. Patent states that the moisture-permeable waterproof fabric exhibits excellent water vapor permeability and resistance to water permeation therethrough and is free from environmental problems. However, it has been found that the PEE film is fixed to the substrate fabric through an adhesive agent, and when a polyurethane resin is used as an adhesive agent, and the resultant laminated fabric is discarded and burnt, the polyurethane resin contained in the laminated fabric may cause generation of a poisonous gas. Thus, it is difficult to bind the PEE film to the substrate fabric with safety.
As a possible means for solving the problem, Japanese Unexamined Patent Publication No. 2000-290878 discloses a method of producing a coated fabric by directly coating a surface of a substrate fabric with two types of PEE resins different in film-forming property from each other. The resultant coated fabric exhibits excellent water vapor permeability and waterproofing properties at an initial stage of use. However, when a home laundering procedure using water is applied to the coated fabric, the coated film is easily broken to cause the waterproofing property of the coated fabric to deteriorate to great extent.

Disclosure of the Invention

An object of the present invention is to provide a water-vapor-permeable waterproof composite fabric having a high flexibility, a satisfactory water vapor permeability, and a high water pressure resistance even after a water laundering procedure is applied thereto, a waterproof textile article containing the same and a processes for producing the same with a high efficiency.
The above-mentioned object can be attained by the water-vapor-permeable waterproof composite fabric, waterproof textile article and the process of the present invention.
The water-vapor-permeable waterproof composite fabric of the present invention comprises a substrate fabric comprising a fiber material; and a film layer comprising a polyether-ester elastomer (PEE-A) and, laminated to at least one surface of the substrate fabric through a binder layer comprising a polyether-ester elastomer (PEE-B) for the film layer and located between the substrate fabric and the film layer, each of the PEE-A for the film layer and the PEE-B for the binder layer comprising polyalkylene glycol residues, alkyleneglycol residues and dicarboxylic acid residues, wherein,

(1) the PEE-A for the film layer contains polyethylene glycol residues in an amount of 5 to 25% by mass based on the total mass of the PEE-A,

(2) the film layer of the PEE-A has a thickness in the range of from 5 to 50 $\mu$m,

(3) the PEE-B for the binder layer has a melting temperature of 20°C or more below that of the PEE-A for the film layer, and

(4) the binder layer of the PEE-B is present in an amount of 2 to 20 g/m$^2$.

In the water-vapor-permeable waterproof composite fabric of the present invention, preferably, the alkyleneglycol residues in the PEE-A comprise ethyleneglycol residues and tetramethylene glycol residues, the ethyleneglycol residues being in an amount of at least 30 molar% based on the total molar amount of the alkyleneglycol residues.

In the water-vapor-permeable waterproof composite fabric of the present invention, preferably, the film layer of the PEE-A exhibits an area expansion of 5% or less when the film layer has a thickness of 15 $\mu$m and is immersed in water at a temperature of 40°C for 30 minutes.

The water-vapor-permeable waterproof composite fabric of the present invention preferably has an initial water pressure resistance of 50 kPa or more and a water pressure resistance after ten launderings in accordance with JIS L 0217, Table 1, No. 103, of 50% or more of the initial water pressure resistance.

The water-vapor-permeable waterproof composite fabric of the present invention preferably has a water pressure resistance after ten launderings in accordance with JIS L 0217, Table 1, No. 103, of 50 kPa or more.

The water-vapor-permeable waterproof composite fabric of the present invention preferably has a water vapor permeability of 3000 g/m$^2$-24 hr or more.

The water-vapor-permeable waterproof composite fabric of the present invention preferably has a peeling strength of 6.0 N/25 mm or more between the substrate fabric and the PEE-A film layer laminated on the substrate fabric through the PEE-B binder layer.

The water-vapor-permeable waterproof composite fabric of the present invention preferably has a loop stiffness of 5.0N or less.

The waterproof textile article of the present invention comprises the water-vapor-permeable waterproof composite fabric of the present invention as mentioned above.

The waterproof textile article of the present invention preferably further comprises a waterproofing tape comprising a polyester elastomer and covering seams of the water-vapor-permeable waterproof composite fabric to waterproof the seams.

In the waterproof textile article of the present invention, the waterproofing tape preferably comprises a substrate layer and a binder layer formed on a surface of the substrate layer, the substrate layer comprising an elastomer having a melting temperature of 150°C or more, and the binder layer comprising an elastomer having a melting temperature of 50 to 130°C.

In the waterproof textile article of the present invention, the elastomer for the binder layer of the waterproofing tape is preferably selected from polyether-ester elastomers.

The process (1) of the present invention for producing a water-vapor-permeable waterproof composite fabric comprises;

forming a film having a thickness of 5 to 50 $\mu$m and comprising a polyether-ester elastomer (PEE-A) comprising polyalkyleneglycol residues, alkyleneglycol residues and dicarboxylic acid residues, the PEE-A containing polyethylene glycol residues in an amount of 5 to 25% by mass based on the total mass of the PEE-A;

preparing a solution of a polyether-ester elastomer (PEE-B) comprising polyalkyleneglycol residues, alkyleneglycol residues and dicarboxylic acid residues and having a melting temperature of 20°C or more below that of the PEE-A, in an organic solvent;

laminating the PEE-A film to a surface of a substrate fabric comprising a fiber material through a coating layer of the PEE-B solution in an amount of PEE-B of 2 to 20 g/m$^2$; and

heat-pressing the resultant laminate, under pressure, at the melting temperature of the PEE-B or higher and lower than the melting temperature of the PEE-A, to thereby bind the PEE-A film layer to the substrate fabric through the PEE-B binder layer.

In the process (1) of the present invention, preferably the PEE-B solution is coated on a surface of the PEE-A film before the laminating step.

The process (2) of the present invention for producing a water-vapor-permeable waterproof composite fabric comprises:

forming a film having a thickness of 5 to 50 $\mu$m and comprising a polyether-ester elastomer (PEE-A) comprising polyalkyleneglycol residues, alkyleneglycol residues and dicarboxylic acid residues, the PEE-A containing polyethylene glycol residues in an amount of 5 to 25% by mass based on the total mass of the PEE-A;

preparing a solution of a polyether-ester elastomer (PEE-B) comprising polyalkyleneglycol residues, alkyleneglycol residues and dicarboxylic acid residues and having a melting temperature of 20°C or more below that of the PEE-A, in an organic solvent;

coating the PEE-B solution in an amount of PEE-B of 2 to 20 $g/m^2$ on a surface of the PEE-B film;

drying the coated PEE-B solution layer on the PEE-B film surface to form a PEE-B binder layer;

laminating the PEE-A film to a surface of a substrate fabric comprising a fiber material through the dried PEE-B binder, layer; and

heat pressing the resultant laminate, under pressure, at the melting temperature of the PEE-B or higher and lower than the melting temperature of the PEE-A, to thereby bind the PEE-A film layer to the substrate fabric through the PEE-B binder layer.

In the process (1) or (2) of the present invention, preferably the PEE-A film is formed by a melt method.

In the process (1) or (2) of the present invention, preferably the organic solvent comprises at least one member selected from the group consisting of dimethylformamide, dioxane, 1,3-dioxolane, toluene, chloroform and methylene chloride.

In the process (1) or (2) of the present invention, preferably the laminating and heat-pressing steps are carried out by using a heat calender.

The process (3) of the present invention for producing a water-vapor-permeable waterproof composite fabric comprises:

forming a film having a thickness of 5 to 50 $\mu m$ and comprising a polyether-ester elastomer (PEE-A) comprising polyalkyleneglycol residues, alkyleneglycol residues and dicarboxylic acid residues, the PEE-A containing polyethylene glycol residues in an amount of 5 to 25% by mass based on the total mass of the PEE-A;

preparing a melt of a polyether-ester elastomer (PEE-B) comprising polyalkyleneglycol residues, alkyleneglycol residues and dicarboxylic acid residues and having a melting temperature of 20°C or more below that of the PEE-A;

coating a surface of the PEE-A film with the melt of the PEE-B in a coating amount of 2 to 20 $g/m^2$,

laminating the PEE-A film to a surface of a substrate fabric comprising a fiber material through the PEE-B Layer; and

heat-pressing the resultant laminate at the melting temperature of the PEE-B or higher and lower than the melting temperature of the PEE-A under pressure.

In the process (3) of the present invention, preferably the PEE-A film is formed by the melt method.

In the process (3) of the present invention, preferably the laminating and heat-pressing steps are carried out by using a heat-calender.

Best Mode of Carrying Out the Invention

The water-vapor-permeable waterproof composite fabric of the present invention comprises a coating layer comprising two types of polyetherester elastomers (PEE) which are different in melting temperature from each other and which cause no or very slight environmental problems, and which are formed on a surface of fiber fabric substrate. The resultant composite fabric of the present invention exhibits high water vapor permeability and water pressure resistance both initially and after laundering with water. In the water-vapor-permeable waterproof composite fabric of the present invention, a PEE-A film having a high water vapor permeability and an excellent resistance to laundering is adhered to a surface of a substrate fabric through a PEE-B binder having a high binding property. The resultant composite further exhibits a water vapor permeability and a water pressure resistance even after, laundering, which could not be attained by the prior art.

In the present invention, generally the polyetherester elastomer (PEE) comprises polyalkylene glycol residues (PAG), alkyleneglycol residues (AG) and dicarboxylic acid residues (DC).

The PEE-A for the film layer and the PEE-B for the binder layer are different in melting temperature from each other.

The film layer and the binder layer must satisfy the following requirements.

(1) in the PEE-A for the film layer, polyethylene glycol residues are contained in an amount of 5 to 25% by mass based on the total mass of the PEE-A,

(2) the film layer of the PEE-A has a thickness in the range of from 5 to 50 $\mu m$,

(3) the PEE-B for the binder layer has a melting temperature of 20°C or more below that of the PEE-A for the film layer, and

(4) the binder layer of the PEE-B is present in an amount of 2 to 20 $g/m^2$.

In the film layer, the content of polyethyleneglycol residues in the PEE-A is in the range of from 5 to 25%, preferable 10 to 20% by mass, based on the total mass of the PEE-A. If the content of the polyethylene glycol residues in the PEE-A is less than 5% by mass, the resultant composite fabric exhibits an unsatisfactory water vapor permeability. Also, if the content of the polyethylene glycol residues in the PEE-A is more than 25% by mass, the resultant composite fabric exhibits an unsatisfactory water pressure resistance (resistance to water permeation under pressure) after laundering with water, due to a reduced resistance of the resultant film layer to breakage during laundering with water.

Preferably, the polyethylene glycol residues are present in a content of 20 to 60% by mass based on the total mass of the polyalkylene glycol residues in the PEE-A.

When the PEE-A film layer is formed as an outermost layer of the water-vapor-permeable waterproof composite fabric, preferably the outermost film layer is formed from a PEE-A resin having a high wear resistance. For the high wear resistant PEE-A resin, preferably the ethyleneglycol residues are formed from a mixture of ethyleneglycol and tetramethyleneglycol and the content of the ethyleneglycol residues in the alkyleneglycol residues is 30 molar% or more. The content of the ethyleneglycol residues of 30 molar% or more in the alkyleneglycol residues contributes to enhancing the wear resistance of the resultant PEE-A film. Further, the molar ratio of the ethyleneglycol residues to the tetraethyleneglycol residues contained in the alkylene glycol residues in the PEE-A is preferably 35:65 to 50:50.

The PEE-A resin for the film layer preferably exhibits an intrinsic viscosity (IV) of 0.8 to 1.4, determined in a mixed solvent consisting of phenol and tetrachloroethane in a mixing ratio of 6:4 at a temperature of 35°C, to impart a high film-forming property to the PEE-A resin and high mechanical strength to the resultant PEE-A resin film.

Also, the PEE-A resin preferably has a melting temperature of 150 to 200°C, to improve the processability of the PEE-A resin.

Further, the PEE-A resin preferably exhibits a low solubility in a solvent, for example, 1,3-dioxolane, used to prepare a coating solution of the PEE-B resin, at coating and processing temperatures for the PEE-B solution.

The PEE-B resin for the binder layer comprises polyalkylene glycol (PAG) residues alkyleneglycol (AG) residues and dicarboxylic acid (DC) residues. Preferably, the polyalkylene glycol residues are present in a content of 50% by mass or more in the polyalkylene glycol residues.

Also, for the purpose of enhancing the water vapor permeability of the PEE-B resin, a portion of the polyalkylene glycol residues different from polytetramethylene glycol residues may contain polyethylene glycol residue.

Since the PEE-B is close in chemical composition to the PEE-A, they have a high affinity to each other and, when a PEE-B binder layer is formed on a PEE-A film layer, these layers exhibit, in the interface therebetween, a high bonding property to each other. To enhance the interface bonding property, the melting temperature of the PEE-B binder layer must be 20°C or more below the melting temperature of the PEE-A film layer.

In this case, when the PEE-A film layer is laminated on the substrate fabric through the PEE-B binder layer, the PEE-B binder layer can firmly bind the PEE-A film layer to the substrate fabric by heat-pressing the laminate by using a heat calender at a temperature higher than the melting temperature of the PEE-B binder layer to that melting the PEE-B binder layer. To melt the PEE-B binder layer with a high efficiency, the PEE-B binder layer is preferably heated at a temperature of 10°C or more above the melting temperature of the PEE-B binder layer. In this case, to prevent melting of the PEE-A film layer, the melting temperature of the PEE-A film layer is 20°C above the melting temperature of the PEE-B binder layer. Preferably, the difference in melting temperature between the PEE-A film layer and the PEE-B binder layer is 30 to 100°C.

If the temperature difference is less than 20°C, the heating procedure for melting the PEE-B binder layer may cause the PEE-A film layer to be melted, and the resultant composite fabric to exhibit an unsatisfactory water pressure resistance.

The melting temperature of the PEE-B resin is preferably in the range of from 50 to 150°C, more preferably from 70 to 130°C, to enhance the efficiency of the lamination procedure.

To enhance the flexibility (softness) of the PEE-B binder layer, the alkyleneglycol residues in the PEE-B resin preferably include tetramethyleneglycol residues in an increased content. The preferable content of the tetramethylene glycol residues in the alkyleneglycol residues is 80 to 100 molar%.

The common flatness of the PEE-A resin and the PEE-B resin will be explained below.

The discarboxylic acid residues of the PEE-A and -B resins are preferably derived from at least one member selected from aromatic dicarboxylic acids, for example, terephthalic acid, isophthalic acid, phthalic acid, naphthalene-2,6-dicarboxylic acid, naphthalene-2,7-dicarboxylic acid, diphenyl-4,4'-dicaraboxylic acid, diphenoxyethane dicarboxylic acid, and sodium 3-sulfoisophthalate; cycloaliphatic dicarboxylic acids, for example, 1,4-cyclohexanedicarboxylic acid; aliphatic dicarboxylic acids, for example, succinic acid, oxalic acid, adipic acid, sebacic acid, dodecane diacid and dimer acids; and ester-forming derivatives thereof, more preferably terephthalic acid, isophthalic acid, naphthalene-2,6-dicaboxylic acid and ester-forming derivatives thereof, for example, acid anhydrides thereof. A portion of the dicarboxylic acid residues, preferably 30 molar% or less based on the total molar amount of the dicarboxylic acid residues, may be replaced by at least one member selected from dicarboxylic acids other than the above-mentioned dicarboxylic acids and hydroxycarboxylic acids.

The polyalkylene glycol residues of the PEE-A and -B resins may contain, as a portion thereof, at least one member selected from, for example, residues of polyethylene glycol, poly-1,2-propylene glycol, poly-1,3-propylene glycol, polytetramethylene glycol, copolymers of ethyleneoxide with propylene oxide and copolymers ethyleneoxide with tetrahydrofuran, as long as the PEE-A film layer and the PEE-B binder layer satisfy requirements (1) and (3).

Also, the polyalkylene glycol residues for both the PEE-A resin and the PEE-B resin preferably have a number average molecular weight of 600 to 800, more preferably 1,000 to 5,000.

When the molecular weight is less than 600, the resultant PEE-A film layer and PEE-B binder layer may exhibit unsatisfactory mechanical properties. Also, when the molecular weight is more than 8,000, an undesirable phase-separation may occur in the resultant polymers and thus the target PEE-A or PEE-B are difficult to prepare.

In each of the PEE-A and PEE-B resins, the alkylene glycol residues may include at least one member selected from, for example, residues of ethylene glycol, propylene glycol and tetramethylene glycol.

In each of the PEE-A for the film layer and the PEE-B for the binder layer, preferably the polyalkylene glycol (PAG) residues and the alkylene glycol (AG) residues and the dicarboxylic acid (DC) are present in a mass ratio (PAG/(AG + DC)) in the range of from 25:75 to 75:25 more preferably 40:60 to 60:40. When the total content of AG and DC is less than 25% by mass, the resultant PEE-A or PEE-B resin may exhibit too low a melting temperature and, when the total content of AG and DC is more than 75% by mass, the resultant PEE-A or PEE-B layer may have an unsatisfactory flexibility.

The PEE-A film layer and the PEE-B binder layer optionally contain an additive, comprising at least one member selected from, for example, stabilizers and ultraviolet ray-absorbers.

The PEE-A film is preferably produced by a melt method in which the PEE-A resin is melted and formed into a film. When the PEE-A film is produced by a solution method in which the PEE-A resin is dissolved in a volatile solvent, the resin solution is formed into a thin layer and the thin resin layer is dried and solidified. In the solution method, when the resin solution is formed into a thin solution layer, a plurality of gas bubbles are easily formed in the solution layer, and when the thin solution layer containing the bubbles is dried, the bubbles in the resultant resin film causes a plurality of pinholes to be formed in the resin film. Particularly, when laundering is applied to the bubble-containing resin film, the bubble-containing portions of the film have a reduced thickness and thus pinholes are formed in the film. Namely, when the water pressure resistance of the film is measured after ten launderings are applied to the film, a plurality of defects are formed in the laundered film.

The PEE-A film produced by the melt method contains no bubbles and thus exhibit a high resistance to pinhole-formation. When a thin film having the pinholes is subjected to a water pressure resistance test in which a surface of the film is brought into contact with water under pressure, and water drops are formed on the opposite surface of the film, the tested film has pinholes.

Where a PEE-A film having no pinhole is bonded to a substrate fabric through a PEE-B binder layer, and the resultant composite fabric is subjected to the water pressure resistance test, the film is partially separated from the substrate fabric, the separated portions of the film is inflated under the water pressure and then broken to allow water to pass through the film.

The PEE-A resin usable for the permit invention preferably exhibits an area expansion of 5% or less, the PEE-A resin is formed into a film having a thickness of 15 μm and the film is immersed in water at a temperature of 40°C for 30 minutes.

If the area expansion of PEE-A film is more than 5%, the water pressure resistance of the resultant composite fabric having a PEE-A film layer may decrease with laundering in water.

In the water-vapor-permeable waterproof composite fabric of the present invention, the substrate fabric is not limited to specific fabrics as long as the fabric comprises a fiber material. The fibers for the substrate fabric are preferably selected from polyester fibers, for example, polyethylene terephthalate fibers, polyamide fibers, for example, nylon 6 and nylon 66 fibers, acrylonitrile polymer or copolymer fibers, vinyl polymer or copolymer fibers, semisynthetic fibers, for example, cellulose triacetate fibers, and mixtures of the above-mentioned fibers, for example, polyethylene terephthalate fiber-cotton mixtures and nylon 6 fiber-cotton mixtures. The substrate fabric may be in the form of a woven fabric, knitted fabric or nonwoven fabric.

In the composite fabric of the present invention, a front surface or both the front and back surfaces of the substrate fabric are entirely or partially laminated with the PEE-A film layer through the PEE-B binder layer.

The thickness of the PEE-A film layer is preferably 5 μm or more to obtain a satisfactory water pressure resistance of the resultant composite fabric and not more than 50 μm to obtain a satisfactory hand of the resultant composite fabric. It is more preferably in the range of from 10 to 20 μm. The smaller the scattering in thickness of the PEE-A film layer, the higher the evenness in the performance of the PEE-A film layer.

Thus, the scattering in thickness of the PEE-A film layer is preferably ±50% or less, more preferably ±30% or less, based on the average thickness of the film layer.

The thickness of the PEE-B binder layer is preferably as thin as possible, as long as the PEE-B binder layer exhibits a satisfactory bonding strength.

Generally, the total thickness of the PEE-A film layer and the PEE-B binder thickness is preferably not more than 50 µm. In view of the limited total thickness of the PEE-A film layer and the PEE-B binder layer, the water vapor permeability and the resistance to laundering of the PEE-A film layer should be as high as possible per unit thickness of the film layer. The total thickness of the PEE-A film layer and the PEE-B binder layer refers to only a sum in thickness of the PEE-A film layer and the PEE-B binder layer located on the surface of the substrates fabric, and a portion of the PEE-B binder layer penetrated into the inside of the substrate fabric is disregarded.

The amount of the PEE-B binder layer is preferably in the range of from 2 to 20 g/m$^2$, more preferably 5 to 10 g/m$^2$, by dry solid mass. If the amount of the PEE-B binder layer is less than 2 g/m$^2$, the bonding strength between the film layer and the substrate fabric through the binder layer may be unsatisfactory, and thus the film layer may be easily broken by laundering and after laundering the resultant composite fabric may exhibit an insufficient water pressure resistance. Also, if the amount of the binder layer is more than 20 g/m$^2$, the resultant composite fabric may exhibit an insufficient water vapor permeability. Generally, to obtain a high water vapor permeability, the amount of the PEE-B binder layer should be controlled to as small as possible. Particularly, the dry amount of the PEE-B binder layer is preferably 70% by mass or less, more preferably 5 to 40% by mass, based on the total dry mass of the PEE-A film layer and the PEE-B binder layer.

In the water-vapor-permeable waterproof composite fabric of the present invention, the PEE-A film layer is optionally coated by an outermost coating layer as long as the coating amount of the outermost coating layer is small and comprises a polymeric material other than the PEE-A resin. The polymeric material for the outermost coating layer is preferably selected from functional polymers, for example, water repellent resins such as fluorine-containing polymers, and silicone resins. The proportion in mass of the outermost coating layer to the total mass of the PEE-A film layer, the PEE-B binder layer and the outermost coating layer is preferably kept low at, for example, up to 20% by mass, to obtain the resultant composite fabric having satisfactory water vapor permeability and flexibility.

The water-vapor-permeable waterproof composite fabric of the present invention preferably have an initial vapor pressure resistance of 50 kPa or more, preferably 70 - 500 kPa or more, and a water pressure resistance after ten launderings in accordance with JIS L 0217, table 1, No. 103, of 50% or more, more preferably 10% or more, of the initial water pressure resistance. Still more preferably, the water pressure resistance of the composite fabric after 10 times of launderings is 50 kPa or more.

The water-vapor-permeable waterproof composite fabric of the present invention preferably exhibits a water vapor permeability of 3,000 g/m$^2$·24 hr or more, more preferably, 3,500 to 10,000 g/cm$^2$·24 hr.

The flexibility or softness of the composite fabric can be represented by a loop stiffness of the composite fabric. Preferably, the loop stiffness of the composite fabric of the present invention is preferably 8N or less, more preferably 5N or less, at still more preferably 4N or less, determined in accordance with JIS L 1096, Method C (Loop compression method).

The water-vapor-permeable waterproof composite fabric of the present invention preferably has a peeling strength between the substrate fabric and the PEE-A film layer laminated on the substrate fabric through the PEE-B binder layer is 6.0 N/25 mm or more, more preferably 10 N/25 mm or more.

The water-vapor-permeable waterproof composite fabric as mentioned above can be produced by the following processes of the present invention.

A process (1) of the present invention for producing a water-vapor-permeable waterproof composite fabric comprises the steps of:

forming a film having a thickness of 5 to 50 µm and comprising a polyether-ester elastomer (PEE-A) comprising polyalkyleneglycol residues, alkyleneglycol residues and dicarboxylic acid residues, the PEE-A containing polyethylene glycol residues in an amount of 5 to 25% by mass based on the total mass of the PEE-A;

preparing a solution of a polyetherester elastomer (PEE-B) comprising polyalkyleneglycol residues, alkyleneglycol residues and dicarboxylic acid residues and having a melting temperature of 20°C or more below that of the PEE-A, in an organic solvent;

adhering the PEE-A film to a surface of a substrate fabric comprising a fiber material through a coating layer of the PEE-B solution in an amount of PEE-B of 2 to 20 g/m$^2$; and

drying the coating layer of the PEE-B solution under pressure at the melting temperature of the PEE-B or higher and lower than the melting temperature of the PEE-A, to thereby bond the PEE-A film layer to the substrate fabric through the dried PEE-B layer.

Also, the process (2) of the present invention for producing a water-vapor-permeable waterproof composite fabric comprises the steps of:

forming a film having a thickness of 5 to 50 µm and comprising a polyetherester elastomer (PEE-A) comprising polyalkyleneglycol residues, alkyleneglycol residues and dicarboxylic acid residues, the PEE-A containing polyethylene glycol residues in an amount of 5 to 25% by mass based on the total mass of the PEE-A;

preparing a solution of a polyetherester elastomer (PEE-B) comprising polyalkyleneglycol residues, alkyleneglycol residues and dicarboxylic acid residues and having a melting temperature of 20°C or more below that of the PEE-A, in an organic solvent;

coating the PEE-B solution in an amount of PEE-B of 2 to 20 g/m$^2$ on a surface of the PEE-B film;

drying the coated PEE-B solution layer on the PEE-B film surface to form a PEE-B binder layer;

laminating the PEE-A film to a surface of a substrate fabric comprising a fiber material through the dried PEE-B binder, layer; and

heat pressing the resultant laminate under pressure at the melting temperature of the PEE-B or higher and lower than the melting temperature of the PEE-A, to thereby bind the PEE-A film layer to the substrate fabric through the PEE-B binder layer.

Further, the process (3) of the present invention for producing a water-vapor-permeable waterproof composite fabric comprises the steps of:

forming a film having a thickness of 5 to 50 μm and comprising a polyetherester elastomer (PEE-A) comprising polyalkyleneglycol residues, alkyleneglycol residues and dicarboxylic acid residues, the PEE-A containing polyethylene glycol residues in an amount of 5 to 25% by mass based on the total mass of the PEE-A;

preparing a melt of a polyetherester elastomer (PEE-B) comprising polyalkyleneglycol residues, alkyleneglycol residues and dicarboxylic acid residues and having a melting temperature of 20°C or more below that of the PEE-A;

coating a surface of the PEE-A film with the melt of the PEE-B in a coating amount of 2 to 20 g/m$^2$;

laminating the PEE-A film to a surface of substrate fabric comprising a fiber material through the PEE-B layer; and

heat-pressing the resultant laminate at the melting temperature of the PEE-B or higher and lower than the melting temperature of the PEE-A under pressure.

The PEE-A film can be produced by a conventional film-forming method. For example, a PEE-A film is formed on a surface of a releasing sheet by a melt method in which the PEE-A resin is melted and the melt is cast, or a solution-casting method in which the PEE-A resin is dissolved in an organic solvent and the resin solution is cast. In the solution-casting method, the solvent capable of dissolving the PEE-A resin therein comprises, for example, at least one member selected from dimethylformamide, dioxane, 1,3-dioxolane, toluene, chloroform and methylene chloride. Especially, 1,3-dioxolane having a low boiling temperature and a low toxicity is preferred. In practice, the organic solvent preferably contains 1,3-dioxolane in a content of 80% by mass or more, based on the total mass of the solvent. In the solution-casting method, the PEE-A resin is preferably dissolved in an amount of 2 to 30% by mass based on the mass of the solvent, more preferably in an amount of 5 to 20% by mass at a temperature of 50 to 65°C, to improve the operative efficiency of the coating procedure. As mentioned above, when a combination of a PEE-A resin with an organic solvent in which combination, the PEE-A resin exhibits a low solubility in the organic solvent at room temperature, is employed, and when the solution of the PEE-B resin in an organic solvent having a low solubility for the PEE-A resin at room temperature, for example, 1,3-dioxolane, is brought into contact with the PEE-A film layer to form a PEE-B binder layer, the solvent in the PEE-B binder layer substantially does not dissolve therein the PEE-A film at room temperature. Therefore, a problem as such that the total thickness of the PEE-A film layer and the PEE-B binder layer alters during the laminating procedure of the PEE-A film on the substrate fabric through the PEE-B binder layer, can be solved. The organic solvent, for example, 1,3-dioxolane is preferably removed by a dry method in which the laminated fabric is dry-heated at a temperature higher than the boiling temperature of the organic solvent but not higher than the melting temperature of the PEE-A film, particularly 100 to 160°C.

In the processes (1) and (2), in the preparation of the PEE-B solution for the binder layer, the PEE-B resin is dissolved in an organic solvent. The organic solvent comprises, for example, at least one member selected from dimethylformamide, dioxane, 1,3-dioxolane, toluene, chloroform and methylene chloride. Especially, 1,3-dioxolane having a low boiling temperature and a low toxicity is preferred. In practice, the organic solvent preferably contains 1,3-dioxolane in a content of 80% by mass or more, based on the total mass of the solvent. In the solution-casting method, the PEE-B resin is preferably dissolved in an amount of 2 to 30% by mass based on the mass of the solvent, more preferably in an amount of 5 to 20% by mass at a temperature of 50 to 65°C. When a solvent having a low solubility for the PEE-A resin is used for the preparation of the PEE-B solution, a problem as such that the total thickness of the PEE-A film layer and the PEE-B binder layer alters during the laminating procedure of the PEE-A film on the substrate fabric through the PEE-B binder layer, can be prevented.

The PEE-B solution can be coated by a conventional coating method, for example, a knife coating method of gravure coating method.

In the process (1), the PEE-B solution is coated on the PEE-A film surface or the substrate fabric surface. When coated on the substrate fabric surface, a portion of the PEE-B solution penetrates into the inside of the substrate fabric. This penetration causes the binding efficiency of the binder layer to decrease and the softness of the resultant composite fabric to decrease. Thus, preferably, the PEE-B solution is coated on a surface of the PEE-A film before the laminating step.

Then, the PEE-A film is laminated on a surface of the substrate fabric through the PEE-B solution layer. The application of the PEE-B solution on the film or the substrate fabric may be carried out during the laminating step.

Alternatively, in the process (2) of the present invention, the PEE-B-solution layer on the PEE-A film surface is dried at a temperature of 70 to 120°C for about 30 seconds to about 5 minutes, and then the PEE-A film is laminated on the substrate fabric surface through the dried PEE-B binder layer.

In the processes (1) and (2), the resultant laminate is heat-pressed, optionally by using a heat-calender, at a temperature lower than melting temperature of the PEE-A resin but not lower than the melting temperature of the PEE-B resin, preferably from 50 to 150°C, more preferably 100 to 130°C, under a liner pressure of 100 - 1,000 N/cm, more preferably 200 to 500 N/cm.

The process (3) of the present invention for producing a water-vapor-permeable waterproof composite fabric comprises the steps of preparing a melt of the PEE-B resin at the melting temperature of the PEE-B resin or higher, and the surface of the PEE-A film is coated with the melt of the PEE-B in a coating amount of 2 to 20 g/m$^2$.

The PEE-A film is laminated on the surface of the substrate fabric through the PEE-B layer which may be in the state of a melt or a solid.

The resultant laminate is heat-pressed at the melting temperature of the PEE-B or higher and lower than the melting temperature of the PEE-A.

To further enhance the water pressure resistance of the water-vapor-permeable waterproof composite fabric of the present invention, preferably, the substrate fabric is subjected to a water repelling treatment. The application of the water repelling treatment to the substrate fabric may be carried out before or after the PEE-A film is laminated through the PEE-A binder layer. If the water repelling treatment includes a curing procedure, the water repelling treatment is preferably applied to the substrate fabric before the lamination of the PEE-A film thereon through the PEE-B binder layer.

For the water repelling treatment, conventional water repelling agents, for example, paraffin, polysiloxane and/or fluorine compound-containing water repelling agents, can be employed. Also, the water repelling treatment may be carried out by conventional water repelling agent padding and spraying methods.

The water-vapor-permeable waterproof composite fabric of the present invention produced by the above-mentioned processes has a uniform PEE-A film layer firmly bound to the substrate fabric through a thin PEE-B binder layer, and thus exhibits excellent water pressure resistance and water vapor permeability even after water launderings are repeatedly applied to the composite fabric. Particularly, the alkyleneglycol residues contained in the PEE-A for the film layer contains ethyleneglycol residues in a content controlled to 30 molar% or more, the resultant composite fabric of the present invention exhibits a high wear resistance in addition to the excellent water vapor permeability and water pressure resistance.

The water-vapor-permeable waterproof composite fabric of the present invention as illustrated above can be used for various waterproof textile articles, for example, raincoats, trench coats, wind breakers. When the waterproof textile articles have seams by which parts of the textile articles are seamed to each other by sewing threads, the seams is preferably waterproofed. In an embodiment of the waterproof textile article of the present invention, the seams are covered by a waterproofing tape comprising a polyester elastomer. Preferably, the waterproofing tape comprises a substrate layer and a binder layer formed on a surface of the substrate layer. The substrate layer preferably comprises a polyester elastomer having a melting temperature of 150°C or more. The binder layer preferably comprises an elastomer having a melting temperature of 50°C to 130°C. The elastomer for the binder layer is preferably selected from polyether-ester elastomers.

The polyester elastomer for the substrate layer preferably comprises hard segments comprising an aromatic polyester elastomer having a high melting temperature of 150°C or more, more preferably 150 to 250°C, and soft segments comprising an amorphous polyether elastomer. In this case, the resultant substrate layer has a high flexibility and a high resistance to hydrolysis.

Alternatively, the polyester elastomer for the substrate layer preferably comprises hard segments comprising aromatic polyester having a high melting temperature and a high crystallinity, and soft segments comprising an amorphous polyester elastomer. In this case, the resultant substrate layer exhibits high resistances to weathering and to chemicals.

Examples

The present invention will be further illustrated by the examples which are merely representative and do not restrict the scope of the present invention in any way.

The tests for the properties of the polymers used in the examples and of the products of the examples were carried out in the manners shown below.

(1) Intrinsic viscosity (IV) of polyetherester elastomer (PEE)

The intrinsic viscosity (IV) of PEE was determined in a mixed solvent consisting of phenol and tetrachloroethane in a mixing weight ratio of 6:4 at a temperature of 35°C.

(2) Melting temperature of PEE

The melting temperature of PEE was determined by a differential scanning calorimeter (Model: DSC 29290, made by TA INSTRUMENT) in a nitrogen gas stream at a temperature increasing rate of 10°C/minute.

(3) Contents of ethylene glycol or tetramethylene glycol in PEE

The content of ethylene glycol or tetramethylene glycol in PEE was determined by using an analyzer FT-NMR (Model: R1900, made by HITACHI LIMITED) at 90 MHz.

(4) Water vapor permeability

The water vapor permeability of a fabric was measured in accordance with JAPANESE INDUSTRIAL STANDARD (JIS) L 1099, A-1 Calcium chloride method, in units of $g/m^2 \cdot 24$ hours.

(5) Water pressure resistance

(Water penetration resistance under pressure)

The water penetration resistance of a fabric under pressure was measured in accordance JIS L 1092, B(a) High water pressure method under hydrostatic pressure, with the following exceptions.

(a) In the measurement of the water pressure resistance of the water-vapor-permeable waterproof composite fabric, the water pressure was applied to the substrate fabric side surface of the composite fabric, and leakages of water through the PEE-A film layer side surface of the composite fabric were detected. In this measurement, the applied pressure of water at a stage at which the water leakages were found at three locations on the PEE-A film layer-side surface, was recorded. However, in the case where the PEE-A film is separated from the substrate fabric during the water pressure measurement and a large amount of water is leaked through one separated position of the composite fabric, this phenomenon was recorded and the water pressure at the separation stage was recorded.

(b) Also, in the water pressure resistance measurement for the PEE-A film, on the back surface of the film on which the substrate fabric was to be laminated, a water repellent polyester fiber fabric having a water pressure resistance of 5.88 kPa was overlaid to provide a testing specimen, and the water pressure was applied to the front-surface of the PEE-A film overlaid on the polyester fiber fabric. The water pressure resistance of the specimen was measured in the same manner as mentioned above.

(6) Water pressure resistance after ten water launderings

(Water pressure resistance after L10)

A water laundering operation as defined in JIS L 0217, Table 1, No. 103 was repeatedly applied ten times to the composite fabric. Thereafter, the 10 times laundered composite fabric was subjected to the same water pressure resistance test as the above-mentioned test (5).

(7) Area expansion

A specimen of a PEE-A film was provided in dimensions of 10 cm $\times$ 10 cm $\times$ 15 µm (thickness). The film specimen was immersed in water at a temperature of 40°C for 30 minutes, and then the area expansion of the specimen due to the water immersion was calculated in accordance with the following equation.

$$\text{Area expansion (\%)}$$

$$= [(A - A_0)/A_0 - 1] \times 100$$

wherein A represents an area of the specimen after the immersion in water and $A_0$ represents an area of the specimen before the immersion in water.

(8) Peeling strength of water-vapor-permeable waterproof composite fabric.

With reference to JIS K 6301, a specimen of the water-vapor-permeable waterproof composite fabric in dimensions of 2.5 cm (width) $\times$ 9.0 cm (length) was adhered at the PEE-A film side surface thereof to a piece of an adhesive fabric tape (trademark: Tape No. 750, made by NITTO DENKO CORPORATION) having the same dimensions as of the specimen, by using a mangle under a pressure of 1 $kPa/cm^2$.

The obtained test piece was placed in a tensile tester and free ends of the composite fabric and the adhesive tape were respectively held by a pair of gripping members of the tensile tester facing each other and spaced 20 mm from each other, and the gripping members were moved in opposite directions at a tensile rate of 50 mm/minute to peel off the adhesive tape from the specimen to cause the PEE-A film be peeled off together with the adhesive tape, from the substrate fabric. The peeling stress was continuously measured, and the average value of the peeling stress per 25 mm width of the specimen was calculated, except for the peeling stress generated in the initial stage of the testing. The peeling strength of the specimen was represented by the average peeling stress.

When the adhesive tape was peeled off from the specimen without causing the PEE-A film layer to be broken, the peeling strength of the composite fabric was evaluated and represented by "10>".

(9) Peeling strength of seam-covering waterproof tape.

The same testing procedure as in item (8) was applied to the seam-covering waterproof tape, except that a test piece was prepared by melt-adhering a binder layer surface of a specimen consisting of a waterproof tape having dimensions of 2 cm (width) × 9 cm (length) was melt-bounded to a polyester fiber fabric having the same dimensions as of the specimen by using a heat calender at a temperature of 120°C under a linear pressure of 200 N/cm. The polyester fiber fabric had the following plain weave structure.

$$\frac{62 \text{ dtex / 36 fil} \times 92 \text{ dtex / 72 fil}}{122 \text{ yarns / 2.54 cm} \times 97 \text{ yarns / 2.54 cm}}$$

The individual filament thicknesses of the warp yarns and the weft yarns were 1.7 dtex and 1.3 dtex, respectively.

(10) Tensile strength and ultimate elongation of film

A film specimen having dimensions of 1 cm (width) × 9 cm (length) was placed in a tensile tester, gripped at two longitudinal end portions thereof by a pair of gripping members facing each other and spaced 5 cm from each other and stretched at a stretching rate of 50 mm/min, to determine the tensile strength and ultimate elongation of the film.

(11) Evaluation of hand of water-vapor-permeable waterproof composite fabric

The hand (touch) of the water-vapor-permeable waterproof composite fabric was evaluated by an orgatoleptic test, by five persons skilled in the art, into the classes shown below, and the evaluated results were averaged.

| Class | Hand |
|---|---|
| 3 | Flexibility is excellent and no frictional sound is generated upon bending the film layer. |
| 2 | Flexibility is satisfactory and a low frictional sound is generated upon bending the film layer. |
| 1 | Hand is paper-like and a high frictional sound is generated upon bending the film layer. |

(12) Loop stiffness

Loop stiffness of a specimen was measured in units of N, in accordance with JIS L 1096, Method C (Loop Compression Method).

PEE Production Example 1

(Production of PEE-A-1 to PEE-A-8 resins)

In a preparation of PEE-A-1, a reaction mixture of 194 parts by mass of dimethyl terephthalate (DMT) with 43.3 parts by mass of ethylene glycol (EG), 72 parts by mass of tetramethylene glycol (TMG), 124 parts by mass of polyethylene glycol (PEG) having an average molecular weight of 4,000 and 0.39 part by mass of a catalyst consisting of tetrabutyl titanate was placed in a reactor equipped with a distillation apparatus; and was subjected to a transesterification reaction at a temperature of 220°C for 10 minutes, while removing a by-product consisting of methyl alcohol from the reactor. After the transesterification reaction was completed, the resultant reaction mixture was placed in a reactor equipped with a stirrer, a nitrogen gas-introducing inlet, a pressure-reduction outlet and a distillation apparatus and heated to a temperature of 240°C, mixed with 0.31 part by mass of a thermal stabilizer (trademark: SUMILIZER GS, made by SUMITOMO .CHEMICAL CO., LTD.); the air in the reactor was replaced by a nitrogen gas, the reaction mixture was subjected to a poly-condensation reaction at the above mentioned temperature under the ambient atmospheric pressure for about 10 minutes and, under a pressure of 1995 to 2660 Pa (15 to 20 mmHg) for about 30 minutes, and then was heated to a temperature of 255°C under a pressure of 13.3 Pa (0.1 mmHg), to continue the polycondensation reaction. After the melt viscosity of the reaction mixture reached a target level, an anti-oxidant (trademark: SUMILIZER GA-80, made by SUMITOMO CHEMICAL CO., LTD.) was added in an amount of 0.62 part by mass to the reaction mixture to stop the polycondensation reaction. The resultant polymer was pelletized by a conventional pellet-forming method. The resultant polyetherester elastomer (PEE-A-1) had an intrinsic viscosity (IV) of 1.163, a melting temperature of 176°C and a content ratio (EG/TMG) of EG and TMG was 33/67.

Each of PEE-A-2 to 8 was produced by the same reaction procedures as those of the PEE-A-1, except that the polyalkylene glycol for the polyalkylene glycol residues consisted of a mixture of the same polyethylene glycol (PEG) as that used for the PEE-A-1 with polytetramethylene glycol (PTMG) having an average molecular weight of 2000 in a mixing mass ratio as shown in Table 1.

Each of the resultant PEE-A-1 to PEE-A-8 resins was completely dissolved in an amount of 5 parts by mass in 95 parts by mass of heated 1,3-dioxolane at a temperature of 60°C, the resultant resin solution was cast on a surface of a glass plate, and then the resin solution layer was dried and dry-heat treated at a temperature of 150°C for 10 minutes, to produce a film. This film will be referred to as a solution method film hereinafter.

The properties of the resultant solution method films are shown in Table 1.

Table 1

| Solution method PEE-A films | | | | | |
|---|---|---|---|---|---|
| Type of PEE-A | Mass ratio PEG/ PTMG | Content of PEG in total PEE-A resin | Thickness of film | Water vapor permeability | Area expansion |
| | | (mass%) | ($\mu$m) | (g/m$^2$·24h) | (%) |
| 1 | 100/ 0 | 35 | 20 | 6100 | 11.0 |
| 2 | 75/ 25 | 26 | 20 | 5100 | 7.0 |
| 3 | 50/ 50 | 17 | 20 | 4200 | 4.5 |
| 4 | 33/ 67 | 11 | 20 | 3600 | 1.3 |
| 5 | 25/ 75 | 9 | 20 | 3200 | 0.75 |
| 6 | 20/ 80 | 7 | 20 | 2400 | 0.45 |
| 7 | 10/ 90 | 3 | 20 | 2000 | 0.05 |
| 8 | 0/100 | 0 | 20 | 1500 | 0.00 |

Separately, each of the PEE-A-1 to -3, -5 and -8 resins were melted at a temperature of 220°C, and the melt was subjected to a film formation procedure by a T-die method, to produce a film having a thickness of 15 $\mu$m.

This film will be referred to as a melt method film hereinafter.

The properties of the resultant melt method films are shown in Table 2.

Table 2

| Melt method PEE-A films | | | | | |
|---|---|---|---|---|---|
| Type of PEE-A | Mass ratio PEG/ PTMG | Content of PEG in total PEE-A resin | Thickness of film | Water vapor permeability | Area expansion |
| | | (mass%) | ($\mu$m) | (g/m$^2$·24h) | (%) |
| 1 | 100/ 0 | 35 | 15 | 7000 | 14.0 |
| 2 | 75/ 25 | 26 | 15 | 6200 | 9.5 |
| 3 | 50/ 50 | 17 | 15 | 5500 | 4.9 |
| 5 | 25/ 75 | 9 | 15 | 3900 | 1.0 |
| 8 | 0/100 | 0 | 15 | 1700 | 0.0 |

Further, a solution method PEE-A film was produced by the same procedures as for the solution method PEE-A-3 film, except that the film thickness was changed from 20 $\mu$m to 15 $\mu$m. This film will be referred to as solution method PEE-A-3a film hereinafter.

The properties of the solution method PEE-A-3 and -3a films and the melt method PEE-A-3 film are shown in Table 3.

Table 3

| Film-forming method | Type of film | Content of PEG in total PEE-A | Thickness of film | Tensile strength of film | Ultimate elongation of film | Water pressure resistance of film |
|---|---|---|---|---|---|---|
| | | (mass%) | (μm) | (N/cm) | (%) | (kPa) |
| Solution method | PEE-A-3a | 17 | 15 | 1.86 | 880 | 150 |
| | PEE-A-3 | 17 | 20 | 3.19 | 870 | 280 |
| Melt method | PEE-A-3 | 17 | 15 | 2.45 | 880 | >300 |
| Note: The water pressure resistance of film was measured by the test method (5) - (b). | | | | | | |

PEE Production Example 2

(Production of PEE-B resin)

A mixture of 31.5 parts by mass of dimethyl isophthalate (IMT) with 18.1 parts by mass of tetramethylene glycol (TMG) and 32.7 parts by mass of polytetramethylene glycol (PTMG) having an average molecular weight at 1,000 was subjected to a transesterification reaction procedure in the same reaction under the same reaction conditions as those in PEE-Production Example 1, and the resultant monomer was subjected to a polycondensation reaction procedure in the same reactor as in PEE-Production Example 1, while increasing the reaction temperature and reducing the reaction pressure, under the same reaction conditions as those in PEE Production Example 1.
The resultant PEE-B resin had a melting temperature of 107°C.

Comparative PEE-Production Example 1

(Production of comparative PEE resin having a melting temperature of 155°C)

A reaction mixture of 210 parts by mass of dimethyl terephthalate (DMT) with 63.6 parts by mass of isophthalic acid (IA), 193.3 parts by mass of tetramethylene glycol (TMG) and 199 parts by mass of polytetramethylene glycol (PTMG) was placed in the same reactor as in PEE-Production Example 1, and was subjected to a transesterification reaction under the same conditions as in PEE-Production Example 1 to provide an etherester monomer. Then, the monomer was subjected to a polycondensation reaction while increasing the reaction temperature and reducing the reaction pressure, to provide a comparative polyetherester elastomer (PEE-C). In the above-mentioned reactions, the PTMG had a number average molecular weight of 2,500. The resultant comparative PEE-C had a melting temperature of 155°C.

Comparative PEE-Production Example 2

(Production of comparative PEE resin having a melting temperature of 172°C)

A reaction mixture of 278 parts by mass of dimethyl terephthalate (DMT) with 42 parts by mass of isophthalic acid (IA), 220 parts by mass of tetramethylene glycol (TMG) and 400 parts by mass of polytetramethylene glycol (PTMG) was placed in the same reactor as in PEE-Production Example 1, and was subjected to a transesterification reaction under the same conditions as in PEE-Production Example 1, to provide an etherester monomer. Then, the monomer was subjected to a polycondensation reaction while increasing the reaction temperature and reducing the reaction pressure, to provide a comparative polyetherester elastomer (PEE-D). In the above-mentioned reactions, and the PTMG had a number average molecular weight of 2,000. The resultant comparative PEE-D had a melting temperature of 172°C.
In the examples and comparative examples, the substrate fabric and the substrate layer-forming elastomer film for the waterproof tape were produced by the following procedures.

(1) Production of Substrate fabric (A)

A Polyester fiber substrate fabric was produced from warp yarns consisting of polyester filament yarns having an individual filament thickness of 1.7 dtex and a yarn count of 62 dtex/36 filaments, and weft yarns having an individual filament thickness of 1.3 dtex and a yarn count of 92 dtex/72 filaments and had the following plain weave structure.

$$\frac{62 \text{ dtex / 36 fil} \times 92 \text{ dtex / 72 fil}}{122 \text{ yarns / 2.54 cm} \times 97 \text{ yarns / 2.54 cm}}$$

The fabric was treated with a water repelling agent (trademark: LS-317, made by MEISEI CHEMICAL WORKS, CO., LTD., a fluorine compound-containing water repellent agent). The resultant water repellent substrate fabric (A) contained the water repelling agent in a dry solid amount of 1.0% by mass based on the mass of the fabric and exhibited a water pressure resistance of 5,88 kPa (600 mmH$_2$O) and a water vapor permeability of 9000 g/m$^2$·24 hr.

(2) <u>Production of elastomer film for forming a substrate layer of waterproof tape</u>

A reaction mixture of 194 parts by mass of dimethyl terephthalate (DMT) with 115 parts by mass of tetramethylene glycol (TMG), 124 parts by mass of polytetramethylene glycol (PTMG) having an average molecular weight of 2,000 and 0.391 part by mass of a catalyst consisting of tetrabutyl titanate was placed in a reactor equipped with a distillation apparatus; and was subjected to a transesterification reaction in a nitrogen gas atmosphere at a temperature of 220°C for 10 minutes, while removing a by-product consisting of methyl alcohol from the reactor. After the transesterification reaction was completed, the resultant reaction mixture was placed in a reactor equipped with a stirrer, a nitrogen gas-introducing inlet, a pressure-reduction outlet and a distillation apparatus and heated to a temperature of 240°C, mixed with 0.31 part by mass of a thermal stabilizer (trademark: SUMILIZER GS, made by SUMITOMO CHEMICAL CO., LTD.); the air in the reactor was replaced by a nitrogen gas, the reaction mixture was subjected to a poly-condensation reaction at the above mentioned temperature under the ambient atmospheric pressure for about 10 minutes, and under a pressure of 1995 to 2660 Pa (15 to 20 mmHg) for about 30 minutes, and then was heated to a temperature of 255°C under a pressure of 13.3 Pa (0.1 mmHg), to continue the polycondensation reaction. After the melt viscosity of the reaction mixture reached a target level, an anti-oxidant (trademark: SUMILIZER GA-80, made by SUMITOMO CHEMICAL CO., LTD.) was added in an amount of 0.62 part by mass to the reaction mixture to stop the polycondensation reaction. The resultant polymer was palletized by a conventional pellet-forming method. The resultant polyetherester elastomer had a melting temperature of 190°C.
The polyester ether elastomer was formed into a film having a thickness of 50 μm and placed on a releasing paper sheet, by a melt-extrusion method.
The polyether-ester elastomer exhibited an area expansion of 0%, determined by the above-mentioned test (7).

<u>Example 1</u>

The PEE-A-3 resin prepared in PEE-Production Example 1 and having a mass ratio PEG/PTMG of 50/50 and a PEG content of 17% by mass based on the total mass of the PEE-A-3 was completely dissolved in an amount of 10 parts by mass in 90 parts by mass of heated 1,3-dioxolane, the PEE-A-3 solution was casted on a surface of a releasing paper sheet, and dried and heat treated at a temperature of 150°C for 3 minutes to provide a PEE-A-3 film having a thickness of 15 μm.
Separately the PEE-B resin produced in PEE-Production Example 2 was completely dissolved in an amount of 25 parts by mass in 75 parts by mass of 1,3-dioxolane. The PEE-B solution was coated in a dry solid amount of 10 g/m$^2$ on a surface of the PEE-A-3 film, and heated at a temperature of 80°C to remove the 1,3-dioxolane to provide a binder layer on the PEE-A-3 film. The PEE-A-3 film was laminated on the substrate fabric (A) through the coated PEE-B binder layer and the resultant laminate was heat-pressed by a heat calender at a temperature of 120°C under a linear pressure of 200 N/cm.
The resultant composite fabric exhibited the properties as shown in Table 4, 5 and 6.

<u>Examples 2 and 3 and Comparative Examples 1 and 2,</u>

In each of Examples 2 and 3 and Comparative Examples 1 and 2, a water-vapor-permeable waterproof composite fabric was produced by the same procedures as in Example 1, except that the coating amount of the PEE-B resin on a surface of the PEE-A-3 film was changed to as shown in Table 4.
The properties of the resultant composite fabric are shown in Table 4.

Examples 4 and 5 and Comparative Examples 3 and 4

In each of Examples 4 and 5 and Comparative Examples 3 and 4, a water-vapor-permeable waterproof composite fabric was produced by the same procedures as in Example 1, except that the thickness of the PEE-A-3 film was changed to as shown in Table 4.

The properties of the resultant composite fabric are shown in Table 4.

Example 6

A water-vapor-permeable waterproof composite fabric was produced by the same procedures as in Example 1, except that the PEE-B solution in 1,3-oxolane was coated on a surface of the substrate fabric (A) in place of the PEE-A-3 film, and the PEE-A-3 film was laminated on the surface of the coated PEE-B solution layer on the substrate fabric.

The test results of the resultant composite fabric are shown in Table 4.

Example 7

A film having a thickness of 15 $\mu$m was produced from the PEE-A-3 resin (PEG/PTMG mass ratio = 50/50, mass content of PEG = 17% based on the total mass of PEE-A resin) prepared PEE-Production Example 1 by the T-die method.

Separately, the PEE-B resin prepared in PEE-Production Example 1 was melted by using a resin melter (made by K.K. HIRANO TECSEED CO., LTD.) at a temperature of 120°C, the melt was coated in a coating amount of 10 g/$m^2$ on a surface of the substrate fabric (A) by using a gravure coater with 20 dots, having a radius of 0.3 mm, per 25.4 mm to form a binder layer. The PEE-A-3 film was laminated on the coated PEE-B binder layer on the substrate fabric, and the laminate was heat-pressed by a heat calender at a temperature of 150°C under a linear pressure of 200 N/cm. The test results of the resultant composite fabric are shown in Table 4.

Table 4

| | Item | Thickness of PEE-A film | Coating dry solid amount of PEE-B resin | Composite fabric | | | | |
| | | | | Initial water pressure resistance | Water pressure resistance after L10 | Water vapor permeability | Peeling strength | Hand |
| Example No. | | ($\mu$m) | (g/$m^2$) | (kPa) | (kPa) | (g/$m^2\cdot$24h) | N/25 mm | |
| Example | 1 | 15 | 10 | 100(*)$_1$ | 70 | 4800 | >10 | 3 |
| | 2 | 15 | 5 | 55(*)$_1$ | 30(*)$_1$ | 5200 | >10 | 3 |
| | 3 | 15 | 18 | 180(*)$_1$ | 150(*)$_1$ | 3500 | >10 | 3 |
| Comparative Example | 1 | 15 | 1.5 | 35(*)$_1$ | 10(*)$_1$ | 6000 | 3 | 3 |
| | 2 | 15 | 23 | 220(*)$_1$ | 180(*)$_1$ | 2200 | >10 | 2 |
| Example | 4 | 25 | 10 | 170(*)$_1$ | 140(*)$_1$ | 3300 | >10 | 3 |
| | 5 | 32 | 10 | 250(*)$_1$ | 210(*)$_1$ | 3100 | >10 | 3 |
| Comparative Example | 3 | 3 | 10 | 15 | 5 | 5100 | >10 | 3 |
| | 4 | 52 | 10 | >300 | >300 | 2200 | >10 | 1 |
| Example | 6 | 15 | 10 | 120(*)$_1$ | 98 | 4300 | >10 | 2 |
| | 7 | 15 | 10 | 170(*)$_1$ | 140(*)$_1$ | 4950 | >10 | 3 |

Note:   (*)$_1$ ... In the water pressure resistance tests (5)-(a), and (6), the film was separated from the substrate fabric before 3 water leakages were found on the film layer surface, and a large amount of water leaked through the film-separated portion of the composite fabric.

Comparative Examples 5 to 7

In each of Comparative Examples 5 to 7, a water-vapor-permeable waterproof composite fabric was produced by the same procedures as in Example 1, except that the PEE-B resin for the binder layer was replaced by the comparative PEE-C resin prepared in Comparative PEE-Production Example 1; the comparative PEE-C resin was dissolved in an amount of 15 parts by mass in 85 parts by mass of 1,3-dioxolane; the resultant PEE-C solution was coated in a dry solid amount of 10 g/m$^2$ on the surface of the PEE-A film; and the heat pressing procedure using the heat calender was carried out at the temperature shown in Table 5.

The test results of the resultant composite fabric are shown in Table 5.

### Table 5

| Item / Example No. | | Type of PEE for binder layer (melting temperature °C) | Heat-pressing temperature of heat calender (°C) | Peeling strength N/25 mm | Water pressure resistance (kPa) | Remarks |
|---|---|---|---|---|---|---|
| Example | 1 | PEE-B (107) | 120 | >10 | 100 | – |
| Comparative Example | 5 | PEE-C (155) | 140 | 0 | – | Not bound |
| | 6 | PEE-C (155) | 155 | 3 | 20 | Insufficient in binding |
| | 7 | PEE-C (155) | 170 | >10 | 15 | (*)$_2$ |

Note:   (*)$_2$ ... In the water pressure resistance test (5)-(a), the film layer and the binder layer were broken.

Example 8

A water-vapor-permeable waterproof composite fabric was produced by the same procedures as in Example 1, with the following exceptions.

A film having a thickness of 15 μm was produced from the PEE-A-3 resin (PEG/PTMG mass ratio = 50/50, mass content of PEG = 17% based on the total mass of PEE-A resin) prepared PEE-Production Example 1 by the T-die method.

Separately, the PEE-B resin prepared in PEE-Production Example 1 was completely dissolved in an amount of 25 parts by mass in 75 parts by mass in 1,3-dioxolane at a temperature of 50°C. The PEE-B solution was coated in a dry solid amount of 10 g/m$^2$ on a surface of the PEE-A-3 film by using a gravure coater with 20 dots having a radius of 0.3 mm per 25.4 mm to form a binder layer.

The PEE-B solution layer coated on the film was heated at a temperature of 80°C to remove 1,3-dioxolane, and the dried PEE-A-3 film was laminated on the substrate fabric through the dried PEE-B binder layer. The resultant laminate was heat-pressed by a heat calender at a temperature of 120°C under a linear pressure of 200 N/cm.

The test results of the resultant composite fabric are shown in Table 6.

Example 9

A water-vapor-permeable waterproof composite fabric was produced by the same procedures as in Example 8, except that the PEE-A-3 resin (PEG/PTMG mass ratio = 50/50, content of PEG = 17% by mass based on the total mass of PEE-A-3) was replaced by the PEE-A-1 prepared in PEE-Production Example 1 and having a PEG/PTMG mass ratio of 100/0 and a PEG content in the PEE-A-1 of 35% by mass. The test results of the resultant composite fabric are shown in Table 6.

Comparative Example 8

A water-vapor-permeable waterproof composite fabric was produced by the same procedures as in Example 1, except that the PEE-A-1 resin (PEG/PTMG mass ratio = 100/10, PEG content in PEE-A-1 = 35% by mass) was formed into a film having a thickness of 15 μm by the T-die method. The PEE-A-1 film was directly melt-bound on the substrate fabric (A) without using a binder.

The resultant composite fabric exhibited a poor peeling strength due to the lack of the binder layer.

The test results of the composite fabric are shown in Table 6.

Comparative Example 9

The PEE-C prepared in Comparative PEE-Production Example 2 was completely dissolved in an amount of 10 parts by mass in 90 parts by mass of 1,3-dioxolane heated to a temperature of 60°C, and the PEE-C solution was coated in a dry solid amount of 5 g/m$^2$ on a surface of the substrate fabric (A) by using a knife coater, while controlling a clearance between the substrate fabric surface and the coating edge of the knife coater, then the coated PEE-C layer was dry heat-treated at a temperature of 130°C for one minute to form an undercoat layer.

Separately, the PEE-A-1 prepared in PEE-Production Example 1 (PEG/PTMG mass ratio = 100/0, PEG content = 35% based on the mass of PEE-A-1) was completely dissolved in an amount of 7 parts by mass in 93 parts by mass of 1,3-dioxolane heated to a temperature of 60°C. The PEE-A-1 solution was coated in a dry solid amount of 15 g/m$^2$ on the undercoat layer on the substrate fabric (A), and dry heat-treated at a temperature of 150°C for 3 minutes to form an uppercoat layer.

The under- and upper-coat layers were formed on a rough surface of the substrate fabric (A), and thus pinhole were formed in these coat layers.

Thus, the resultant composite fabric exhibited a poor water pressure resistance after ten water launderings.

The test results of the composite fabric are shown in Table 6.

Comparative Example 10

A water-vapor-permeable waterproof composite fabric was produced by the same procedures as in Comparative Example 9, except that the PEE-A-1 resin was replaced by the PEE-A-3 resin having a PEG/PTMG mass ratio of 50:50 and a PEG content in the PEE-A-3 of 17% by mass.

The properties of the composite fabric are shown in Table 6. The undercoat layer and the uppercoat layer had pinholes and the resultant composite fabric exhibited a poor water pressure resistance.

## Table 6

| Example No.<br><br>Item | | Example | | | Comparative Example | | |
|---|---|---|---|---|---|---|---|
| | | 1 | 8 | 9 | 8 | 9 | 10 |
| Film-forming method | | Solution | Melt | Melt | Melt | Solution | Solution |
| Film-binding method | | PEE-B binder, PEE-A film Lamination | PEE-B binder, PEE-A film Lamination | PEE-B binder, PEE-A film Lamination | No PEE-B binder, PEE-A film Lamination | No film, PEE-B coating, PEE-A coating, | No film, PEE-B coating, PEE-A coating, |
| PEG/PEE-A ratio (%) | | 17 | 17 | 35 | 35 | 35 | 17 |
| Thickness of PEE-A film μm | | 15 | 15 | 15 | 15 | 15 | 15 |
| Coating amount of PEE-B (g/m$^2$) | | 10 | 10 | 10 | 0 | 5 | 5 |
| Water pressure resistance | Initial (kPa) | 100(*)$_1$ | 210(*)$_1$ | 200(*)$_1$ | 206(*)$_1$ | 120 | 90 |
| | After L10 (kPa) | 70 | 180(*)$_1$ | 90 | 45(*)$_1$ | 26 | 60 |
| Water vapor permeability (g/m$^2$·24h) | | 4800 | 4600 | 6700 | 6500 | 6500 | 4000 |
| Peeling strength (N25.4 mm) | | >10 | >10 | >10 | 4.5 | 6.0 | 6.4 |
| Loop stiffness (N) | | 2.5 | 2.1 | 2.1 | 1.5 | 6.1 | 6.0 |

Note: (*)$_1$ ... The same as in Table 4.

Example 10

A seam-coating waterproof tape was produced as follows.

The elastomer film as mentioned above was employed to form a substrate layer of the waterproof tape.

The PEE-B prepared in PEE-Production Example 1 was completely dissolved in an amount of 25 parts by mass in 75 parts by mass of 1,3-dioxolane heated to a temperature of 60°C. The PEE-B solution was coated in a dry solid amount of 10 g/m$^2$ on a surface of the elastomer film by using #32 gravure coater, and the coated film was heated at a temperature of 80°C to an extent such that the content of the 1,3-dioxolane in the coated PEE-B layer is reduced to 2% by mass or less.

The resultant waterproof tape was bound to the composite fabric of Example 8 by using a heat calender at a temperature of 120°C under a linear pressure of 200 N/cm. The bound waterproof tape exhibited an initial peeling strength of 10 N/25 mm or more and the peeling strength did not change after ten water launderings. Namely, the waterproof tape had an excellent bonding strength to the composite fabric of the present invention. Also, the waterproof tape can be recycled, and re-used.

The water-vapor-permeable waterproof composite fabric of the present invention has a coating layer comprising only polyether-ester elastomer resins, and thus can be burnt off without generating harmful gases, upon being wasted. Also, the composite fabric exhibits a sufficient water vapor permeability for practical use, a high peeling strength and a superior water pressure resistance even after repeated water launderings, and thus is appropriate for home use.

Also, the processes of the present invention enable the PEE-A coating layer to have a uniform thickness and the resultant composite fabric, having a desired hand, to be stably produced.

## Claims

1. A water-vapor-permeable waterproof composite fabric comprising; a substrate fabric comprising
   a fiber material; and
   a film layer comprising a polyether-ester elastomer (PEE-A), and laminated to at least one surface of the substrate fabric through a binder layer comprising a polyether-ester elastomer (PEE-B) and located between the substrate fabric and the film layer,
   each of the PEE-A for the film layer and the PEE-B for the binder layer comprising polyalkylene glycol residues, alkyleneglycol residues and dicarboxylic acid residues, wherein,

   (1) the PEE-A for the film layer contains polyethylene glycol residues in an amount of 5 to 25% by mass based on the total mass of the PEE-A,
   (2) the film layer of the PEE-A has a thickness in the range of from 5 to 50 $\mu$m,
   (3) the PEE-B for the binder layer has a melting temperature of 20°C or more below that of the PEE-A for the film layer, and
   (4) the binder layer of the PEE-B is present in an amount of 2 to 20 g/m$^2$.

2. The water-vapor-permeable waterproof composite fabric as claimed in claim 1, wherein the alkyleneglycol residues in the PEE-A comprise ethyleneglycol residues and tetramethylene glycol residues, the ethyleneglycol residues being in an amount of at least 30 molar% based on the total molar amount of the alkyleneglycol residues.

3. The water-vapor-permeable waterproof composite fabric as claimed in claim 1, wherein the film layer of the PEE-A exhibits an area expansion of 5% or less when the film layer has a thickness of 15 $\mu$m and is immersed in water at a temperature of 40°C for 30 minutes.

4. The water-vapor-permeable waterproof composite fabric as claimed in claim 1, having an initial water pressure resistance of 50 kPa or more and a water pressure resistance after 10 launderings in accordance with JIS L 0217, Table 1, No. 103, of 50% or more of the initial water pressure resistance.

5. The water-vapor-permeable waterproof composite fabric as claimed in claim 1, having a water pressure resistance after 10 launderings in accordance with JIS L 0217, Table 1, No. 103, of 50 kPa or more.

6. The water-vapor-permeable waterproof composite fabric as claimed in claim 1, having a water vapor permeability of 3000 g/m$^2$-24 hr or more.

7. The water-vapor-permeable waterproof composite fabric as claimed in claim 1, having a peeling strength of 6.0 N/25 mm or more between the substrate fabric and the PEE-A film layer laminated on the substrate fabric through the PEE-B binder layer.

8. The water-vapor-permeable waterproof composite fabric as claimed in claim 1, having a loop stiffness of. 5.0N or less.

9. A waterproof textile article comprising the water-vapor-permeable waterproof composite fabric as claimed in anyone of claims 1 to 8.

**10.** A waterproof textile article as claimed in claim 9, further comprising a waterproofing tape comprising a polyester elastomer and covering seams of the water-vapor-permeable waterproof composite fabric to waterproof the seams.

**11.** The waterproof textile article as claimed in claim 10, wherein the waterproofing tape comprises a substrate layer and a binder layer formed on a surface of the substrate layer, the substrate layer comprising an elastomer having a melting temperature of 150°C or more, and the binder layer comprising an elastomer having a melting temperature of 50 to 130°C.

**12.** The waterproof textile article as claimed in claim 11, wherein the elastomer for the binder layer of the waterproofing tape is selected from polyether-ester elastomers.

**13.** A process for producing a water-vapor-permeable waterproof composite fabric comprising;
forming a film having a thickness of 5 to 50 μm and comprising a polyether-ester elastomer (PEE-A) comprising polyalkyleneglycol residues, alkyleneglycol residues and dicarboxylic acid residues, the PEE-A containing polyethylene glycol residues in an amount of 5 to 25% by mass based on the total mass of the PEE-A; preparing a solution in an organic solvent, or a melt of a polyether-ester elastomer (PEE-B) comprising polyalkyleneglycol residues, alkyleneglycol residues and dicarboxylic acid residues and having a melting temperature of 20°C or more below that of the PEE-A, in an organic solvent;
laminating the PEE-A film to a surface of a substrate fabric comprising a fiber material through a coating layer of the PEE-B solution or the melt in an amount of PEE-B of 2 to 20 g/m$^2$; and
heat-pressing the resultant laminate under a pressure at the melting temperature of the PEE-B or higher and lower than the melting temperature of the PEE-A, to thereby bind the PEE-A film layer to the substrate fabric through the PEE-B binder layer.

**14.** The process as claimed in claim 13, wherein the PEE-B solution is coated on a surface of the PEE-A film before the laminating step.

**15.** The process as defined in claim 13, further comprising the following steps between the step of preparing the PEE-B solution or the melt and the lamination step:

coating the PEE-B solution in an amount of PEE-B of 2 to 20 g/m$^2$ on a surface of the PEE-A film;
drying the coated PEE-B solution layer on the PEE-A film surface or coating the PEE-B melt in an amount of PEE-B of 2 to 20 g/m$^2$ on the surface of the PEE-A film, to form a PEE-B binder layer, and in the laminating step, the PEE-A film is laminated to a surface of a substrate fabric comprising a fiber material through the dried PEE-B binder layer.

**16.** The process as claimed in claim 13 or 15, wherein the PEE-A film is formed by a melt method.

**17.** The process as claimed in claim 13 or 15, wherein the organic solvent comprises at least one member selected from the group consisting of dimethylformamide, dioxane, 1,3-dioxolane, toluene, chloroform and methylene chloride.

**18.** The process as claimed in claim 13 or 15, wherein the laminating and heat-pressing steps are carried out by using a heat calender.

**Patentansprüche**

**1.** Wasserdampfdurchlässiger, wasserresistenter Verbundstoff, umfassend einen Substratstoff, umfassend ein Fasermaterial; und eine Filmschicht, umfassend ein Polyether-Ester-Elastomer (PEE-A) und mit zumindest einer Oberfläche des Substratstoffes durch eine Bindemittelschicht laminiert, umfassend ein Polyether-Ester-Elastomer (PEE-B) und lokalisiert zwischen dem Verbundstoff und der Filmschicht;
wobei das PEE-A für die Filmschicht und das PEE-B für die Bindemittelschicht Polyalkylenglycolreste, Alkylenglycolreste und Dicarbonsäurereste umfassen; worin

(1) das PEE-A für die Filmschicht Polyethylenglycolreste in einer Menge von 5 bis 25 Massen-%, bezogen auf die Gesamtmasse des PEE-A umfasst,

(2) die Filmschicht des PEE-A eine Dicke im Bereich von 5 bis 50 µm hat,

(3) das PEE-B für die Bindemittelschicht eine Schmelztemperatur von 20°C oder mehr unterhalb der des PEE-A für die Filmschicht hat und

(4) die Bindemittelschicht des PEE-B in einer Menge von 2 bis 20 g/m$^2$ vorhanden ist.

2. Wasserdampfdurchlässiger, wasserresistenter Verbundstoff nach Anspruch 1, worin die Alkylenglycolreste in dem PEE-A Ethylenglycolreste und Tetramethylenglycolreste umfassen, wobei die Ethylenglycolreste in einer Menge von wenigstens 30 Molar-% vorhanden sind, bezogen auf die gesamte molare Menge der Alkylenglycolreste.

3. Wasserdampfdurchlässiger, wasserresistenter Verbundstoff nach Anspruch 1, worin die Filmschicht des PEE-A eine Flächenexpansion von 5% oder weniger entfaltet, wenn die Filmschicht eine Dicke von 15 µm hat und in Wasser bei einer Temperatur von 40°C für 30 min getaucht wird.

4. Wasserdampfdurchlässiger, wasserresistenter Verbundstoff nach Anspruch 1, mit einer anfänglichen Wasserdruckresistenz von 50 kPa oder mehr und einer Wasserdruckresistenz nach 10 Waschungen entsprechend JIS L 0217, Tabelle 1, Nr. 103, von 50% oder mehr der anfänglichen Wasserdruckresistenz.

5. Wasserdampfdurchlässiger, wasserresistenter Verbundstoff nach Anspruch 1 mit einer Wasserdruckresistenz nach 10 Waschungen entsprechend JIS L 0217, Tabelle 1, Nr. 103, von 50 kPa oder mehr.

6. Wasserdampfdurchlässiger, wasserresistenter Verbundstoff nach Anspruch 1, mit einer Wasserdampfpermeabi-lität von 3000 g/m$^2$-24 h oder mehr.

7. Wasserdampfdurchlässiger, wasserresistenter Verbundstoff nach Anspruch 1, mit einer Abschälstärke von 6,0 N/25 mm oder mehr zwischen dem Substratstoff und der PEE-A Filmschicht, die auf dem Substratstoff durch die PEE-B Bindemittelschicht laminiert ist.

8. Wasserdampfdurchlässiger, wasserresistenter Verbundstoff nach Anspruch 1, mit einer Schleifenfestigkeit von 5,0 N oder weniger.

9. Wasserresistenter Textilgegenstand, umfassend den wasserdampfdurchlässigen, wasserresistenten Verbundstoff nach einem der Ansprüche 1 bis 8.

10. Wasserresistenter Textilgegenstand nach Anspruch 9, weiterhin umfassend ein wasserresistentes Band, umfassend ein Polyesterelastomer, das die Säume des wasserdampfdurchlässigen, wasserresistenten Verbundstoffes abdeckt, unter Erhalt der Wasserresistenz der Säume.

11. Wasserresistenter Textilgegenstand nach Anspruch 10, worin das wasserresistente Band eine Substratschicht und eine Bindemittelschicht umfasst, gebildet auf einer Oberfläche der Substratschicht, wobei die Substratschicht ein Elastomer mit einer Schmelztemperatur von 150°C oder mehr umfasst und die Bindemittelschicht ein Elastomer mit einer Schmelztemperatur von 50 bis 130°C umfasst.

12. Wasserresistenter Textilgegenstand nach Anspruch 11, worin das Elastomer für die Bindemittelschicht des wasserresistenten Bandes ausgewählt ist aus Polyether-Ester-Elastomeren.

13. Verfahren zur Erzeugung eines wasserdampfdurchlässigen, wasserresistenten Verbundstoffes, umfassend Bildung eines Filmes mit einer Dicke von 5 bis 50 µm und umfassend ein Polyether-Ester-Elastomer (PEE-A), umfassend Polyalkylenglycolreste, Alkylenglycolreste und Dicarbonsäurereste, wobei das PEE-A Polyethylenglycolreste in einer Menge von 5 bis 25 Massen-% umfasst, bezogen auf die Gesamtmasse des PEE-A; Herstellung einer Lösung in einem organischen Lösungsmittel oder einer Schmelze eines Polyether-Ester-Elastomers (PEE-B), umfassend Polyalkylenglycolreste, Alkylenglycolreste und Dicarbonsäurereste und mit einer Schmelztemperatur, die 20°C oder mehr niedriger ist als die von PEE-A, in einem organischen Lösungsmittel; Laminieren des PEE-A-Filmes an eine Oberfläche eines Substratstoffes, umfassend ein Fasermaterial, durch eine Beschichtungsschicht der PEE-B-Lösung oder Schmelzen von PEE-B in einer Menge von 2 bis 20 g/m$^2$; und Wärmepressen des resultierenden Laminates unter einem Druck bei der Schmelztemperatur des PEE-B oder mehr und niedriger als die Schmelztemperatur des PEE-A, um hierdurch die PEE-A-Filmschicht mit dem Substratstoff durch die PEE-B-Bindemittelschicht zu binden.

14. Verfahren nach Anspruch 13, worin die PEE-B-Lösung auf eine Oberfläche des PEE-A-Filmes vor dem Laminationsschritt geschichtet wird.

15. Verfahren gemäß Anspruch 13, weiterhin umfassend die folgenden Schritte zwischen dem Schritt der Herstellung der PEE-B-Lösung oder der Schmelze und dem Laminierschritt:

Beschichten der PEE-B-Lösung in einer Menge von PEE-B von 2 bis 20 g/m$^2$ auf eine Oberfläche des PEE-A-Filmes;

Trocknen der beschichteten PEE-B-Lösungsschicht auf der PEE-A Filmoberfläche oder Beschichten der PEE-B-Schmelze in einer Menge des PEE-B von 2 bis 20 g/m$^2$ auf die Oberfläche des PEE-A-Filmes, zur Bildung einer PEE-B-Bindemittelschicht, und wobei beim Laminationsschritt der PEE-A-Film mit einer Oberfläche eines Substratstoffes, umfassend ein Fasermaterial, durch die getrocknete PPE-B-Bindemittelschicht laminiert ist.

16. Verfahren nach Anspruch 13 oder 15, worin der PEE-A-Film durch ein Schmelzverfahren gebildet wird.

17. Verfahren nach Anspruch 13 oder 15, worin das organische Lösungsmittel zumindest ein Mitglied umfasst, ausgewählt aus der Gruppe, bestehend aus Dimethylformamid, Dioxan, 1,3-Dioxolan, Toluol, Chloroform und Methylenchlorid.

18. Verfahren nach Anspruch 13 oder 15, worin die Laminier- und Wärmepressschritte durch Verwendung eines Wärmekalanders durchgeführt werden.

## Revendications

1. Tissu composite imperméable à l'eau et perméable à la vapeur d'eau comprenant ; un tissu de substrat comprenant :

un matériau de fibre ; et

une couche de film comprenant un élastomère polyéther ester (PEE-A), et pelliculé sur au moins une surface du tissu de substrat à travers une couche de liant comprenant un élastomère polyéther ester (PEE-B) et situé entre le tissu de substrat et la couche de film,

chacun des PEE-A pour la couche de fil et PEE-B pour la couche de liant comprenant des résidus de polyalkylène glycol, des résidus d'alkylène glycol et des résidus d'acide dicarboxylique, dans lequel,

(1) le PEE-A pour la couche de film contient des résidus de polyéthylène glycol, en une quantité de 5 à 25 % en masse, par rapport à la masse totale du PEE-A,

(2) la couche de film du PEE-A a une épaisseur dans la plage de 5 à 50 µm,

(3) le PEE-B pour la couche de liant a une température de fusion de 20 °C, ou plus, en dessous de celle du PEE-A pour la couche de film, et

(4) la couche de liant du PEE-B est présente en une quantité de 2 à 20 g/m$^2$.

2. Tissu composite imperméable à l'eau et perméable à la vapeur d'eau selon la revendication 1, dans lequel les résidus d'alkylène glycol dans le PEE-A comprennent des résidus d'éthylène glycol et des résidus de tétraméthylène glycol, les résidus d'éthylène glycol se trouvant en une quantité d'au moins 30 % en moles, par rapport à la quantité moléculaire des résidus d'alkylène glycol.

3. Tissu composite imperméable à l'eau et perméable à la vapeur d'eau selon la revendication 1, dans lequel la couche de film du PEE-A révèle une expansion de zone de 5 % ou moins, lorsque la couche de film a une épaisseur

**EP 1 305 164 B1**

de 15 µm et est immergée dans l'eau, à une température de 40 °C, pendant 30 minutes.

**4.** Tissu composite imperméable à l'eau et perméable à la vapeur d'eau selon la revendication 1, ayant une résistance initiale à la pression de l'eau de 50 kPa, ou plus et une résistance à la pression de l'eau après 10 lavages en machine conforme à la norme JIS L 0217, Tableau 1, N0 103, de 50 kPa, ou plus de la résistance initiale à la pression de l'eau.

**5.** Tissu composite imperméable à l'eau et perméable à la vapeur d'eau selon la revendication 1, ayant une résistance à la pression de l'eau après 10 lavages en machine conforme à la norme JIS L 0217, Tableau 1, N0 103, de 50 kPa, ou plus.

**6.** Tissu composite imperméable à l'eau et perméable à la vapeur d'eau selon la revendication 1, ayant une perméabilité à la vapeur d'eau de 3000 $g/m^2$ par 24 heures, ou plus.

**7.** Tissu composite imperméable à l'eau et perméable à la vapeur d'eau selon la revendication 1, ayant une résistance au détachement de 6,0 N/25 mm, ou plus entre le tissu de substrat et la couche de film de PEE-A pelliculée sur le tissu de substrat à travers la couche de liant de PEE-B.

**8.** Tissu composite imperméable à l'eau et perméable à la vapeur d'eau selon la revendication 1, ayant une résistance à la boucle de 5,0 N, ou moins.

**9.** Article en textile imperméable à l'eau et selon la revendication 1, comprenant le tissu composite imperméable à l'eau et perméable à la vapeur d'eau, selon l'une quelconque des revendications 1 à 8.

**10.** Article en textile imperméable à l'eau selon la revendication 9, comprenant en outre un ruban d'imperméabilisation comprenant un élastomère polyester et recouvrant les coutures du tissu composite imperméable à l'eau et perméable à la vapeur d'eau pour imperméabiliser les coutures.

**11.** Article en textile imperméable à l'eau selon la revendication 10, dans lequel le ruban d'imperméabilisation comprend une couche de substrat et une couche de liant formée sur une surface de la couche de substrat, la couche de substrat comprenant un élastomère ayant une température de fusion de 150 °C ou plus, et la couche de liant comprenant un élastomère ayant une température de fusion de 50 à 130 °C.

**12.** Article en textile imperméable à l'eau selon la revendication 11, dans lequel l'élastomère pour la couche de liant du ruban d'imperméabilisation est choisi parmi les élastomères de polyéther ester.

**13.** Procédé de fabrication d'un tissu composite imperméable à l'eau et perméable à la vapeur d'eau comprenant :

la formation d'un film ayant une épaisseur de 5 à 50 µm et comprenant un élastomère de polyéther ester (PEE-A) comprenant des résidus de polyalkylène glycol, des résidus d'alkylène glycol et des résidus d'acide carboxylique, le PEE-A contenant des résidus de polyéthylène glycol en une quantité de 5 à 25 % en masse, par rapport à la masse totale du PEE-A ;

la préparation d'une solution dans un solvant organique, ou d'une fusion d'un élastomère de polyéther ester (PEE-B) comprenant des résidus de polyalkylène glycol, des résidus d'alkylène glycol et des résidus d'acide carboxylique, et ayant une température de fusion de 20 °C ou plus, en dessous de celle du PEE-A, dans un solvant organique ;

le pelliculage du film de PEE-A sur une surface d'un tissu de substrat comprenant un matériau de fibre à travers une couche d'enduction de la solution de PEE-B ou la fusion en une quantité de PEE-B de 2 à 20 $g/mm^2$ ; et

le pressage à chaud du pelliculé résultant sous une pression à la température de fusion du PEE-B ou supérieure et inférieure à la température de fusion du PEE-A, afin de lier ainsi la couche de film de PEE-A au tissu de substrat à travers la couche de liant de PEE-B.

**14.** Procédé selon la revendication 13, dans lequel la solution de PEE-B est enduite sur une surface du film de PEE-A avant l'étape de pelliculage.

22

**15.** Procédé selon la revendication 13, comprenant en outre les étapes suivantes entre l'étape de préparation de la solution de PEE-B ou l'étape de fusion et de pelliculage :

l'enduction de la solution de PEE-B en une quantité de PEE-B de 2 à 20 g/m$^2$ sur une surface du film de PEE-A ;

le séchage de la couche de solution de PEE-B enduite sur une surface du film de PEE-A ou l'enduction du PEE-B fondu en une quantité de PEE-B de 2 à 20 g/m$^2$ sur la surface du film de PEE-A, afin de former une couche de liant de PEE-B, et pendant l'étape de pelliculage, le film de PEE-A est pelliculé sur une surface d'un tissu de substrat comprenant un matériau de fibres, à travers la couche de liant de PEE-B sec.

**16.** Procédé selon la revendication 13 ou 15, dans lequel le film de PEE-A est formé grâce à un procédé de fusion.

**17.** Procédé selon la revendication 13 ou 15, dans lequel le solvant organique comprend au moins un élément choisi dans le groupe consistant en le diméthylformamide, la dioxane, la 1,3-dioxolane, le toluène, le chloroforme et le chlorure de méthylène.

**18.** Procédé selon la revendication 13 ou 15, dans lequel les étapes de pelliculage et de pressage à chaud sont exécutées en utilisant un laminoir à chaud.